# EUROPÄISCHE PATENTSCHRIFT

(11) **EP 1 857 703 B1**
(45) Veröffentlichungstag und Bekanntmachung des Hinweises auf die Patenterteilung: **09.04.2014**
(21) Anmeldenummer: 07008394.4
(22) Anmeldetag: 25.04.2007
(51) Int. Cl.: F16D 48/06

(54) **Verfahren der Ansteuerung eines elektrischen Antriebsmotors einer hydrostatischen Pumpe in einem hydraulischen System**
Method for actuating an electrical motor of a hydrostatic pump in a hydraulic system
Procédé de commande d'un moteur électrique d'une pompe hydrostatique dans un système hydraulique

(30) Priorität: 17.05.2006 DE 102006023011
(43) Veröffentlichungstag der Anmeldung: 21.11.2007
(73) Patentinhaber: Schaeffler Technologies GmbH & Co. KG, 91074 Herzogenaurach (DE)
(72) Erfinder: Grethel, Marco, 77830 Bühlertal (DE)

(56) Entgegenhaltungen:
- GB-A- 972 049
- GB-A- 2 305 227
- JP-A- 59 065 624

## Beschreibung

Die vorliegende Erfindung betrifft ein Verfahren der Ansteuerung eines elektrischen Antriebsmotors einer hydrostatischen Pumpe in einem hydraulischen System gemäß dem Oberbegriff des Patentanspruchs 1.

Die vorliegende Erfindung betrifft ein Verfahren der Ansteuerung eines elektrischen Antriebsmotors einer hydrostatischen Pumpe in einem hydraulischen System zur Pedalkraftunterstützung bei der Betätigung einer Kupplung, wobei das hydraulische System einen Geberzylinder und einen Nehmerzylinder sowie ein Steuerventil aufweist und die elektrische Leistung des Antriebsmotors nach der für einen in einer ersten vorbestimmten Zeitdauer durchgeführten Auskuppelvorgang benötigten Wellenleistung bestimmt ist.

Ein mit beispielsweise einem Handschaltgetriebe betätigtes Fahrzeug weist zur Trennung des Triebstrangs des Fahrzeugs beim Gangwechselvorgang und als Anfahrelement eine vom Fahrer des Fahrzeugs mittels Fußkraft zu betätigende Kupplung auf. Um nun die vom Fahrer aufzubringende Fußkraft, die der Pedalkraft am Kupplungsbetätigungspedal entspricht, zu verringern, sind bereits hydraulisch unterstützte Betätigungssysteme bekannt geworden. Ein solches hydraulisches System zur Pedalkraftunterstützung bei der Betätigung einer Kupplung weist üblicherweise einen pedalkraftseitigen Geberzylinder und einen kupplungsseitigen Nehmerzylinder auf sowie ein Steuerventil und eine hydrostatische Pumpe, die mittels eines elektrischen Antriebsmotors betätigt wird.

Um nun die vom Fahrer aufzubringende Pedalkraft zu verringern, kann über die hydrostatische Pumpe in das hydraulische System hydraulische Energie oder hydraulische Leistung eingebracht werden, sodass über die von der Pumpe eingebrachte hydraulische Leistung die Kraft verringert wird, mit der der Fahrer des Fahrzeugs das Kupplungsbetätigungspedal betätigen muss.

Ein solches hydraulisches System ist beispielsweise in der älteren, aber nicht vorveröffentlichten WO 2007/045201 A1 offenbart. Diese Patentanmeldung beschäftigt sich mit der Frage, wie bei einem Systemausfall in der hydraulischen Strecke bzw. dem hydraulischen System die Problematik vermieden werden kann, dass ein vollständiges Öffnen der Kupplung nicht mehr möglich ist oder es bei einem Einkuppelvorgang mit gleichzeitigem Systemausfall aufgrund der damit einhergehenden plötzlichen Volumenänderung in der hydraulischen Strecke zum unkontrollierten Kraftschluss kommt.

Mit diesem hydraulischen System zur Pedalkraftunterstützung wird eine üblicherweise als Servowirkung bezeichnete Wirkung erreicht, wobei zur Auslegung der elektrischen Antriebsleistung der hydrostatischen Pumpe, der Frage also, welche Antriebsleistung der elektrische Antriebsmotor zur Verfügung stellen muss, die maximale, im hydraulischen System notwendige Leistung herangezogen wird. Der elektrische Antriebsmotor wird daher nach der maximal denkbaren Wellenleistung ausgelegt und hierfür ist die Leistung maßgeblich, die für ein schnellstmögliches Öffnen der Kupplung benötigt wird, also die beim Auskuppeln unter maximaler Betätigungsgeschwindigkeit erforderliche Wellenleistung.

Die Wellenleistung des elektrischen Antriebsmotors wird also nach einem für die Maximalleistung erforderlichen Leistungskriterium ausgelegt. Mit dieser Maximalleistung nun wird bei bekannten Systemen der elektrische Antriebsmotor betrieben, sodass ein entsprechend hoher Energieeintrag in das hydraulische System vorliegt.

Aus der GB 972049 A ist ein Verfahren bekannt, das auf den Oberbegriff des Patentanspruchs 1 lesbar ist.

Der vorliegenden Erfindung liegt nunmehr die Aufgabe zugrunde, die von dem elektrischen Antriebsmotor in das hydraulische System eingetragene Energie und damit die im System vorhandene und zur Betätigung der Kupplung nicht in jedem Fall benötigte Energie bedarfsgerecht anzupassen, sodass die von dem hydraulischen System dissipierte Verlustleistung verringert werden kann. Da die vom elektrischen Antriebsmotor in das hydraulische System eingetragene Energie von der Nennleistung des Antriebsmotors abhängig ist und die Nennleistung nicht notwendigerweise mit der vom elektrischen Antriebsmotor bereitgestellten Maximalleistung übereinstimmen muss, liegt der vorliegenden Erfindung auch die Aufgabe zugrunde, ein Verfahren der Ansteuerung eines elektrischen Antriebsmotors zu schaffen, der nicht unter dem Gesichtspunkt der maximal erforderlichen Leistung ausgewählt worden ist.

Erfindungsgemäß gelöst wird diese Aufgabe durch ein Verfahren gemäß Anspruchs 1. Vorteilhafte Ausgestaltungen hiervon sind in den weiteren Ansprüchen beschrieben.

Die Erfindung stellt nun ein Verfahren bereit der Ansteuerung eines elektrischen Antriebsmotors einer hydrostatischen Pumpe in einem hydraulischen System zur Pedalkraftunterstützung bei der Betätigung einer Kupplung, wobei das hydraulische System einen Geberzylinder und einen Nehmerzylinder sowie ein Steuerventil aufweist und die elektrische Leistung des Antriebsmotors nach der für einen in einer ersten vorbestimmten Zeitdauer durchgeführten Auskuppelvorgang benötigten Wellenleistung bestimmt ist und die Drehzahl der Motorwelle des Antriebsmotors bei einem Einkuppelvorgang und einem Halten des Betätigungswegs der Kupplung sowie einem Auskuppelvorgang in einer zweiten vorbestimmten Zeitdauer, die länger ist, als die erste vorbestimmte Zeitdauer, kleiner ist als die der benötigten Wellenleistung entsprechende erste Drehzahl.

Die Erfindung macht sich daher die Erkenntnis zu Nutzen, dass es bei einem Einkuppelvorgang der betätigten Kupplung und einem Halten des Betätigungswegs der Kupplung sowie einem langsamer ablaufenden Auskuppelvorgang nicht erforderlich ist, dem hydraulischen System die hydraulische Leistung zuzuführen, die ihm bei einem schnellen Auskuppelvorgang zugeführt werden muss.

Wird nun ein bekanntes hydraulisches System zur Pedalkraftunterstützung bei der Betätigung einer Kupplung verwendet, so wird der elektrische Antriebsmotor so betrieben, dass die Drehzahl seiner Motorwelle bei einem Einkuppelvorgang kleiner ist als die für die Maximalleistung erforderliche Drehzahl, die der sogenannten Nenndrehzahl des Motors entsprechen kann. Damit wird beim Einkuppelvorgang weniger hydraulische Leistung in das hydraulische System eingetragen und damit auch vom elektrischen Antriebsmotor weniger elektrische Energie benötigt, die aus dem elektrischen Bordspannungsnetz des Fahrzeugs entnommen werden muss. Gleiches gilt auch aufgrund der Erkenntnis, dass dann, wenn die Kupplung auf einem beliebigen Wert ihres Betätigungswegs nicht mehr weiter bewegt werden muss, dann für das Spannen einer im Falle einer selbstschließenden Kupplung beispielsweise vorgesehenen Tellerfeder, keine hydraulische Leistung mehr in das hydraulische System eingebracht werden muss, sondern es ist in einem solchen Fall nur mehr erforderlich, die Kraftunterstützung für den Fahrer des Fahrzeugs aufrechtzuerhalten, wozu lediglich aufgrund systemimmanenter unvermeidbarer Spaltverluste eine daraus resultierende Druckdifferenz zwischen dem Geberzylinder und dem Nehmerzylinder mit einem entsprechenden zugehörigen Volumenstrom, der von der hydrostatischen Pumpe bereitgestellt werden muss, ausgeglichen werden muss.

Auch zu diesem Zweck ist es aber nicht erforderlich, den elektrischen Antriebsmotor mit seiner Maximalleistung zu betreiben, sodass demgemäß der Antriebsmotor mit einer Drehzahl betrieben werden kann, die kleiner ist, als die der bei einem schnellen Auskuppelvorgang benötigten Wellenleistung entsprechende Drehzahl.

Da vom elektrischen Antriebsmotor seine elektrische Maximalleistung nur dann benötigt wird, wenn ein aus der Auslegung des hydraulischen Systems bekannter kürzester Auskuppelvorgang durchgeführt werden muss, der beispielsweise einer Notfallöffnung der Kupplung entsprechen kann, die Betätigungsgeschwindigkeit am Kupplungspedal also maximal ist und als weiteres Kriterium beispielsweise auch festgestellt worden ist, dass die Betriebsbremse des Fahrzeugs betätigt wird, ist es bei einem langsamerem Auskuppelvorgang nicht erforderlich, den elektrischen Antriebsmotor mit seiner Maximalleistung zu betreiben und damit für einen Energieeintrag in das hydraulische System zu sorgen, der nicht zum Öffnen der Kupplung benötigt wird und es daher zu weniger Dissipationsverlusten kommt.

Es ist daher vorgesehen, dass die Drehzahl der Motorwelle des Antriebsmotors bei einem Auskuppelvorgang in einer zweiten vorbestimmten Zeitdauer, die länger ist, als die erste vorbestimmte Zeitdauer - die der kürzesten Betätigungszeit zum Öffnen der Kupplung entspricht - kleiner ist, als die der vorstehend genannten benötigten Wellenleistung entsprechende erste Drehzahl. Damit kann auch bei einem langsamerem Auskuppelvorgang als dem vorgesehenen kürzest möglichen Auskuppelvorgang der von dem elektrischen Antriebsmotor in das hydraulische System induzierte Energieeintrag verringert werden und damit die Verlustleistung des hydraulischen Systems verringert werden.

Es ist vorgesehen, dass die Motordrehzahl des elektrischen Antriebsmotors beim Einkuppeln, Halten des Betätigungswegs der Kupplung und langsamen Auskuppeln kleiner ist als die der für einen in einer ersten vorbestimmten Zeitdauer durchgeführten Auskuppelvorgang benötigten Wellenleistung entsprechende erste Drehzahl. Nach einer Weiterbildung ist es nunmehr vorgesehen, dass die Drehzahl einen Wert im Bereich von weitgehend einem Viertel der ersten Drehzahl bis zu einem Wert kleiner als die erste Drehzahl annimmt. Der elektrische Antriebsmotor wird daher in einem Drehzahlbereich von etwa 25 % der ersten Drehzahl bis zu einem Wert kleiner als der ersten Drehzahl betrieben. Es hat sich dabei als vorteilhaft erwiesen, den elektrischen Antriebsmotor mit etwa der Hälfte der ersten Drehzahl zu betreiben.

Um nun die Bedarfsanpassung der in das hydraulische System eingetragenen hydraulischen Leistung zu realisieren, kann auch der von der hydrostatischen Pumpe geförderte Volumenstrom in Abhängigkeit von der zur Betätigung der Kupplung benötigten hydraulischen Leistung verändert werden.

Zu diesem Zweck ist es beispielsweise vorgesehen, eine zweiflutige oder zweihubige Flügelzellenpumpe zu verwenden, die im Normalbetrieb nur mit einer Flut betrieben wird, also nur eine der beiden Fluten aktiv Fluid fördert, während die Fluidförderung durch die zweite Flut beispielsweise dadurch unterbunden wird, dass der Druckraum der zweiten Flut durch ein Ventil geöffnet ist und die zweite Flut daher drucklos arbeitet, während bei einem hohen Volumenstrombedarf auch die zweite Flut aktiv fördert.

Auch kann zu diesem Zweck beispielsweise eine Verstellpumpe eingesetzt werden, beispielsweise eine Flügelzellenverstellpumpe, deren Fördervolumen oder Verdrängungsvolumen Vₜₕ bedarfsorientiert variiert wird. Daneben ist es beispielsweise auch vorgesehen, eine sogenannte saugseitig gedrosselte Pumpe in der Form beispielsweise einer Kolbenpumpe einzusetzen, die als Konstantpumpe betrieben wird mit einer variablen Drossel auf der Saugseite. Die damit in das hydraulische System eingetragene hydraulische Leistung kann nun bedarfsgerecht durch eine entsprechende Veränderung der Drehzahl des elektrischen Antriebsmotors verändert werden, der auch eine Veränderung des von der hydrostatischen Pumpe geförderten Volumenstroms überlagert werden kann. Damit ist es möglich, die im hydraulischen System für jeden möglichen Betriebszustand benötigte hydraulische Leistung bedarfsgerecht zu variieren, sodass der Eintrag eines nicht benötigten Überschussenergieanteils, der dissipiert wird, vermeiden werden kann.

Es wird auch ein Verfahren der Ansteuerung eines elektrischen Antriebsmotors einer hydrostatischen Pumpe in einem hydraulischen System zur Pedalkraftunterstützung bei der Betätigung einer Kupplung geschaffen, wobei das hydraulische System einen Geberzylinder und einen Nehmerzylinder sowie ein Steuerventil aufweist und die elektrische Leistung des Antriebsmotors nach der für einen in einer ersten vorbestimmten Zeitdauer durchgeführten Einkuppelvorgang benötigten Wellenleistung bestimmt ist, wobei die Drehzahl der Motorwelle des Antriebsmotors bei einem in einer zweiten vorbestimmten Zeitdauer durchgeführten Auskuppelvorgang, die kürzer ist als die erste vorbestimmte Zeitdauer, größer ist als die der benötigten Wellenleistung entsprechende erste Drehzahl.

Damit ist es auch möglich, einen für einen langsamen Einkuppelvorgang ausgelegten elektrischen Antriebsmotor, der nach dem für diesen Anwendungsvorgang des langsamen Einkuppelns benötigten Wellenleistungsbedarf mit einer ersten Drehzahl ausgelegt worden ist, bestimmungsgemäß dann mit einer Drehzahl zu betreiben, die größer oder höher ist als die der benötigten Wellenleistung entsprechende erste Drehzahl. Der elektrische Antriebsmotor wird daher mit Überdrehzahl betrieben, wenn es festgestellt wird, dass beispielsweise ein Notfallöffnungsvorgang der damit betätigten Kupplung durchgeführt werden muss. Dieser Notfallöffnungsvorgang oder schnell ablaufende Auskuppelvorgang läuft dabei in einer Zeitdauer ab, die kürzer ist als die erste vorbestimmte Zeitdauer, während der ein Einkuppelvorgang durchgeführt wird und nach der die benötigte Wellenleistung des elektrischen Motors bestimmt ist. Damit kann der elektrische Antriebsmotor verglichen mit elektrischen Antriebsmotoren in bekannten hydraulischen Systemen deutlich kleiner dimensioniert werden, da er nach der Wellenleistung ausgelegt wird, die für einen langsamen Einkuppelvorgang benötigt wird und er nur gelegentlich und während sehr kurzer Zeit mit Überdrehzahl betrieben werden muss, um einen schnellen Auskuppelvorgang durchzuführen, sodass er dadurch thermisch nicht beschädigt wird.

Wenn nun die für einen in der ersten vorbestimmten Zeitdauer durchgeführten Einkuppelvorgang benötigte Wellenleistung bei Nenndrehzahl des Antriebsmotors vorliegt, kann die für den in der zweiten vorbestimmten Zeitdauer durchgeführten Auskuppelvorgang erforderliche Drehzahl des elektrischen Antriebsmotor größer sein als die genannte Nenndrehzahl.

Die Erfindung wird nun anhand der Zeichnung näher erläutert. Diese zeigt in:
- Fig. 1: eine schematische Darstellung eines hydraulischen Systems zur Pedalkraftunterstützung bei der Betätigung einer Kupplung; und
- Fig. 2: eine Darstellung der erforderlichen Wellenleistung aufgetragen über dem Kupplungsweg.

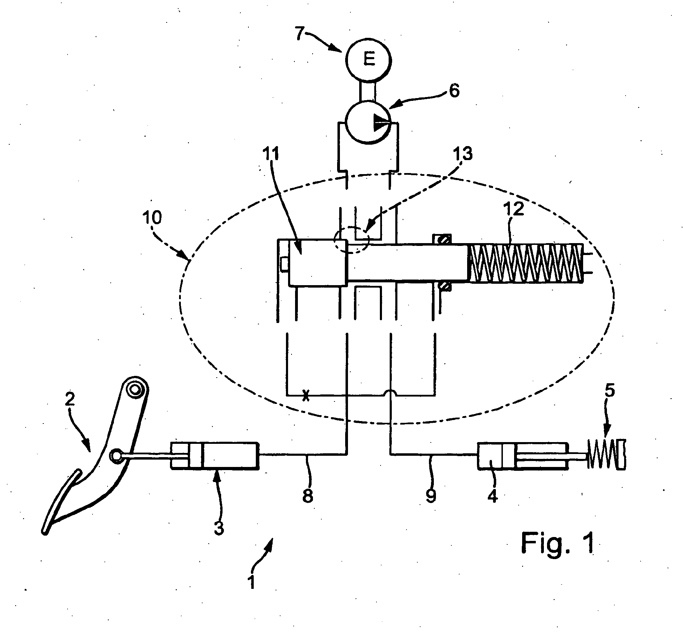

Fig. 1 der Zeichnung zeigt eine schematische Darstellung eines hydraulischen Systems zur Pedalkraftunterstützung bei der Betätigung einer Kupplung. Dabei weist das hydraulische System 1 ein Kupplungsbetätigungspedal 2 auf, welches mit einem Geberzylinder 3 funktional gekoppelt ist. Ausgangsseitig ist ein Nehmerzylinder 4 vorgesehen, der mit einer schematisch als Feder 5 dargestellten Kupplung gekoppelt ist. Über eine Pumpe 6, die von einem elektrischen Antriebsmotor 7 angetrieben wird, kann in das hydraulische System hydraulische Leistung eingetragen werden. Auf diese Weise kann zwischen einem geberzylinderseitigen Leitungsstrang und einem nehmerzylinderseitigen Leitungsstrang 9 eine Servowirkung erzielt werden, die den Fahrer entlastet, der das Kupplungsbetätigungspedal 2 mit seinem Fuß betätigt.

Die Steuerung erfolgt dabei über ein Steuerventil 10, welches einen Ventilkolben 11 besitzt, der von einer Feder 12 beaufschlagt wird und über dessen Steuerkante 13 Leitungsquerschnitte vergrößert bzw. verkleinert werden können. Über den elektrischen Antriebsmotor 7 wird nun die Pumpe 6 angetrieben, bei der es sich um eine Konstantpumpe oder auch um eine Verstellpumpe handeln kann. Wird nun die Wellenleistung des elektrischen Antriebsmotors 7 nach der für einen in einer ersten vorbestimmten Zeitdauer durchgeführten Auskuppelvorgang benötigten Wellenleistung bestimmt, so ist es vorgesehen, dass die Drehzahl der Motorwelle des Antriebsmotors 7 bei einem Einkuppelvorgang und einem Halten des Betätigungswegs der Kupplung sowie einem Auskuppelvorgang in einer zweiten vorbestimmten Zeitdauer, die länger ist, als die erste vorbestimmte Zeitdauer, kleiner ist als die der benötigten Wellenleistung entsprechende erste Drehzahl.

Wird also die Wellenleistung des elektrischen Antriebsmotors 7 nach der für die Betätigung des hydraulischen Systems benötigten Maximalleistung ausgelegt, also für die Leistung zum Antrieb der Pumpe 6, die während eines aus der Auslegungsrechnung bekannten kürzest möglichen Auskuppelvorgangs benötigt wird, so ist es vorgesehen, dass der Motor bei einem Einkuppelvorgang oder beim Halten des Betätigungswegs der Kupplung mit einer Drehzahl betrieben wird, die kleiner ist als die der benötigten Wellenleistung entsprechende vorstehend genannte erste Drehzahl.

Auch bei einem langsameren Auskuppelvorgang, also einem Öffnen der Kupplung während einer Zeitdauer, die länger ist als die Zeitdauer zur aus der Auslegungsrechnung bekannten maximalen Betätigungsgeschwindigkeit der Kupplung beim Auskuppeln, wird weniger hydraulische Leistung benötigt als beim schnellstmöglichen Auskuppelvorgang. Daher wird der elektrische Antriebsmotor 7 auch bei einem solchen langsameren Auskuppelvorgang mit einer niedrigeren Drehzahl betrieben als bei dem schnellen Auskuppelvorgang.

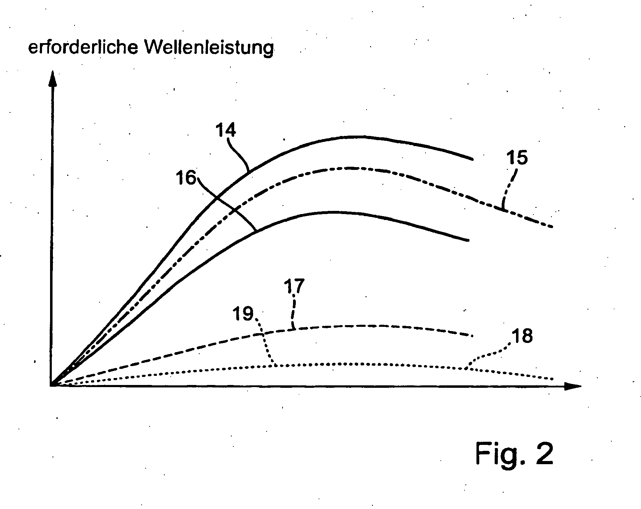

Um nun diesen Zusammenhang zu erläutern, wird auf Fig. 2 der Zeichnung Bezug genommen.

Diese zeigt ein Diagramm der erforderlichen Wellenleistung des Antriebsmotors 7 aufgetragen über dem Kupplungsweg der Kupplung. Das Bezugszeichen 14 zeigt die für das schnellstmögliche Öffnen der Kupplung - also das schnellstmögliche Auskuppeln - benötigte erforderliche Wellenleistung des Antriebsmotors 7 aufgetragen über dem Kupplungsweg. Wird nun der elektrische Antriebsmotor 7 nach dieser Maximalleistung ausgelegt, so zeigt der mit dem Bezugszeichen 15 bezeichnete Kurvenzug die für einen langsamen Auskuppelvorgang benötigte Wellenleistung aufgetragen über dem Kupplungsweg. Wie es ohne weiteres ersichtlich ist, ist die hierfür benötigte Wellenleistung kleiner als die für das schnellstmögliche Auskuppeln benötigte Wellenleistung, sodass es möglich ist, die Drehzahl des Antriebsmotors 7 zu verringern, um dem niedrigeren Leistungsbedarf Rechnung zu tragen.

Ebenso zeigt der mit dem Bezugszeichen 16 bezeichnete Kurvenzug einen Verlauf der erforderlichen Wellenleistung aufgetragen über dem Kupplungsweg und zwar in diesem Fall für die maximale für das Einkuppeln benötigte Leistung. Auch hier liegt der Verlauf des Kurvenzugs 16 unterhalb des Verlaufs des Kurvenzugs 14, sodass eine entsprechende Verringerung der in das System eingetragenen hydraulischen Leistung möglich ist und zu diesem Zweck kann die elektrische Wellenleistung des Antriebsmotors 7 weiter verringert werden.

Schließlich zeigt Fig. 2 einen mit dem Bezugszeichen 17 bezeichneten Kurvenzug, der der erforderlichen Wellenleistung für einen langsamen Einkuppelvorgang entspricht und das Bezugszeichen 18 bezeichnet einen Kurvenzug, der der erforderlichen Wellenleistung bei einem schnellen Einkuppelvorgang entspricht und auch der erforderlichen Wellenleistung beim Halten des Kupplungsbetätigungswegs entspricht (Bezugszeichen 19). Die Leistung für das langsame Einkuppeln gemäß dem Bezugszeichen 17 ist dabei höher als die Leistung für das schnelle Einkuppeln gemäß dem Bezugszeichen 18, da es beim langsamen Einkuppeln zu einem längeren Betätigen des hydraulischen Systems kommt, mit damit einhergehenden Leckageverlusten, die zu größeren Druckdifferenzen zwischen dem Geberzylinder 3 und dem Nehmerzylinder 4 führen, die wiederum von der hydrostatischen Pumpe 6 und damit dem elektrischen Antriebsmotor 7 ausgeglichen werden müssen. Läuft dahingegen der Einkuppelvorgang schneller ab, was durch den Kurvenzug 18 repräsentiert wird, so befindet sich das hydraulische System weniger lang im Einsatz, die Leckargeverluste sinken und damit muss durch die hydrostatische Pumpe 6 weniger hydraulische Leistung in das System eingetragen werden.

Wird schließlich nach einer entsprechenden Betätigung der Kupplung die Kupplung auf dem erreichten Betätigungsweg nicht mehr weiter bewegt, dann muss auch keine Energie mehr für das Spannen der Feder 5 aufgebracht werden. Um nun die Kraftunterstützung aufrechtzuerhalten, ist es lediglich erforderlich, die Druckdifferenz zwischen dem Nehmerzylinder 4 und dem Geberzylinder 3 aufrechtzuerhalten und zwar durch Bereitstellung eines entsprechenden Volumenstroms durch die Pumpe 6 mit entsprechender Betätigung der Pumpe 6 durch den elektrischen Antriebsmotor 7.

Es ist aber auch vorgesehen, die benötigte Wellenleistung des elektrischen Antriebsmotors 7 nach der für einen langsamen Einkuppelvorgang gemäß Kurvenzug 17 benötigten Leistung auszulegen. Wird nun mit einem solchen hydraulischen System ein schneller Einkuppelvorgang durchgeführt, der durch den Kurvenzug 18 repräsentiert wird, so kann die elektrische Wellenleistung des Antriebsmotors 7 weiter verringert werden.

Wird die dem Kurvenzug 16 entsprechende Maximalleistung für einen Einkuppelvorgang benötigt, so kann der elektrische Antriebsmotor 7 mit einer Drehzahl betrieben werden, die geringfügig höher ist als seine dem Kurvenzug 17 entsprechenden Auslegungsdrehzahl, die beispielsweise der Nenndrehzahl entsprechen kann. Eine solche Ansteuerung des elektrischen Antriebsmotors 7 ist nur für eine sehr kurze Zeitdauer erforderlich, sodass dieser keine thermische Schädigung erfährt. Gleiches gilt für die kurzfristige Bereitstellung einer weiter erhöhten Leistung entsprechend dem Kurvenzug 14, auch hier erfährt der elektrische Antriebsmotor keine Schädigung, da ein solcher Leistungsbedarf während eines üblichen Fahrprofils selten vorkommt. Da damit aber der elektrische Antriebsmotor 7 verglichen mit bekannten hydraulischen Systemen zur Pedalkraftunterstützung auf eine geringere Wellenleistung ausgelegt werden kann, kann er entsprechend kleiner und damit kostengünstig dimensioniert werden. Wird schließlich mit dem so dimensionierten elektrischen Antriebsmotor ein Halten des Betätigungswegs der Kupplung realisiert, so entspricht der hierfür benötigt Leistungsbedarf dem für das schnelle Einkuppeln gemäß dem Kurvenzug 18 entsprechenden Leistungsbedarf, die Wellenleistung kann also beispielsweise unter weiterer Absenkung der Drehzahl verringert werden.

Es wird also von der Erkenntnis Gebrauch gemacht, dass in einem solchen hydraulischen System zur Pedalkraftunterstützung bei der Betätigung einer Kupplung die hydraulische Leistung und damit die elektrische Wellenleistung des Antriebsmotors 7 bedarfsgerecht verringert oder erhöht werden kann und damit die in das System eingetragene hydraulische Energie entsprechend angepasst werden kann mit einer daraus folgenden Verringerung der dissipierten Energie.

### Bezugszeichenliste

- 1: hydraulisches System
- 2: Kupplungsbetätigungspedal
- 3: Geberzylinder
- 4: Nehmerzylinder
- 5: Feder, Kupplung
- 6: Pumpe
- 7: elektrischer Antriebsmotor
- 8: Leitungsstrang
- 9: Leitungsstrang
- 10: Steuerventil
- 11: Ventilkolben
- 12: Feder
- 13: Steuerkante
- 14: Kurvenzug
- 15: Kurvenzug
- 16: Kurvenzug
- 17: Kurvenzug
- 18: Kurvenzug
- 19: Kurvenzug

## Patentansprüche

1. Verfahren der Ansteuerung eines elektrischen Antriebsmotors (7) einer hydrostatischen Pumpe (6) in einem hydraulischen System (1) zur Pedalkraftunterstützung bei der Betätigung einer Kupplung (5), wobei das hydraulische System (1) einen Geberzylinder (3), ein Pedal (2) zur mechanischen Betätigung des Geberzylinders (3) und einen Nehmerzylinder (4) sowie ein Steuerventil (10) aufweist und die elektrische Leistung des Antriebsmotors (7) nach der für einen in einer ersten vorbestimmten Zeitdauer durchgeführten Auskuppelvorgang oder Einkuppelvorgang benötigten Wellenleistung bestimmt ist, **dadurch gekennzeichnet, dass** die Drehzahl der Motorwelle des Antriebsmotors (7) bei einem Einkuppelvorgang und einem Halten des Betätigungswegs der Kupplung (5) sowie einem Auskuppelvorgang in einer zweiten vorbestimmten Zeitdauer, die länger ist, als die erste durch den Auskuppelvorgang vorbestimmte Zeitdauer, kleiner ist als die der benötigten Wellenleistung entsprechende erste Drehzahl, und damit der von der Pumpe (6) geförderte Volumenstrom in Abhängigkeit von der zur Betätigung der Kupplung (5) benötigten hydraulischen Leistung verändert wird.

2. Verfahren nach Anspruch 1, **dadurch gekennzeichnet, dass** die Drehzahl einen Wert im Bereich von weitgehend einem Viertel der ersten Drehzahl bis zu einem Wert kleiner als die erste Drehzahl annimmt.

3. Verfahren nach Anspruch 1 oder 2, **dadurch gekennzeichnet, dass** die Drehzahl einen Wert annimmt, der weitgehend der Hälfte der ersten Drehzahl entspricht.

## Claims

1. Method for actuating an electric drive motor (7) of a hydrostatic pump (6) in a hydraulic system (1) for pedal-force assistance during the actuation of a clutch (5), the hydraulic system (1) having a master cylinder (3), a pedal (2) for mechanical actuation of the master cylinder (3), and a slave cylinder (4) and a control valve (10), and the electrical power of the drive motor (7) being determined according to the shaft power which is required for a disengaging operation or engaging operation which is carried out in a first predetermined time period, **characterized in that**, during an engaging operation and holding of the actuating travel of the clutch (5) and a disengaging operation, in a second predetermined time period which is longer than the first time period which is predetermined by the disengaging operation, the rotational speed of the motor shaft of the drive motor (7) is lower than the first rotational speed which corresponds to the required shaft power, and therefore the volumetric flow which is delivered by the pump (6) is varied depending on the hydraulic power which is required to actuate the clutch (5).

2. Method according to Claim 1, **characterized in that** the rotational speed assumes a value in the range from largely one quarter of the first rotational speed to a value lower than the first rotational speed.

3. Method according to Claim 1 or 2, **characterized in that** the rotational speed assumes a value which corresponds largely to half the first rotational speed.

## Revendications

1. Procédé de commande d'un moteur d'entraînement (7) électrique d'une pompe hydrostatique (6) dans un système hydraulique (1) servant à soutenir la force appliquée sur la pédale en cas d'actionnement d'un embrayage (5), le système hydraulique (1) comportant un cylindre émetteur (3), une pédale (2) servant à l'actionnement mécanique du cylindre émetteur (3) et un cylindre récepteur (4) ainsi qu'une soupape de commande (10) et la puissance électrique du moteur d'entraînement (7) étant déterminée en fonction de la puissance d'arbre nécessaire à un processus de découplage ou à un processus de couplage effectués pendant une première durée prédéterminée, **caractérisé en ce que** la vitesse de rotation de l'arbre de moteur du moteur d'entraînement (7) est inférieure, en présence d'un processus de couplage et d'un maintien de la course d'actionnement de l'embrayage (5) ainsi que d'un processus de découplage pendant une deuxième durée prédéterminée plus longue que la première durée prédéterminée par le processus de découplage, à la première vitesse de rotation correspondant à la puissance d'arbre nécessaire, permettant ainsi de faire varier le débit volumique transporté par la pompe (6) en fonction la puissance hydraulique nécessaire à l'actionnement de l'embrayage (5).

2. Procédé selon la revendication 1, **caractérisé en ce que** la vitesse de rotation prend une valeur comprise dans la plage allant d'un bon quart de la première vitesse de rotation jusqu'à une valeur inférieure à la première vitesse de rotation.

3. Procédé selon la revendication 1 ou 2, **caractérisé en ce que** la vitesse de rotation prend une valeur correspondant largement à la moitié de la première vitesse de rotation.
